# EUROPÄISCHE PATENTSCHRIFT

(11) **EP 0 666 809 B1**
(45) Veröffentlichungstag und Bekanntmachung des Hinweises auf die Patenterteilung: **21.08.1996**
(21) Anmeldenummer: 93924090.9
(22) Anmeldetag: 02.11.1993
(51) Int. Cl.: B60T 11/34, B60T 13/14

(54) **HYDRAULISCHES DRUCKMINDERVENTIL**
HYDRAULIC PRESSURE RELIEF VALVE
SOUPAPE HYDRAULIQUE DE REDUCTION DE PRESSION

(30) Priorität: 06.11.1992 DE 4237451
(43) Veröffentlichungstag der Anmeldung: 16.08.1995
(73) Patentinhaber: ITT Automotive Europe GmbH, D-60488 Frankfurt am Main (DE)
(72) Erfinder: BECK, Erhard, D-35781 Weilburg (DE)
(86) Internationale Anmeldenummer: EP9303061
(87) Internationale Veröffentlichungsnummer: WO9411225

(56) Entgegenhaltungen:
- WO-A-92/06875
- DE-A- 3 702 732
- FR-A- 1 172 685
- FR-A- 2 210 528
- GB-A- 2 018 921
- GB-A- 2 021 718
- GB-A- 2 098 294
- GB-A- 2 127 508
- US-A- 3 680 922
- US-A- 5 066 072

## Beschreibung

Die vorliegende Erfindung bezieht sich auf ein hydraulisches Druckminderventil gemäß dem Oberbegriff des Hauptanspruchs.

Ein gattungsgemäßes Druckminderventil ist aus der DE-36 33 969-A1 bekannt. Das darin beschriebene Druckminderventil weist drei Kammern auf, die von unterschiedlichen Drücken beaufschlagt sind. Die erste Kammer, die mit einem Hochdruckspeicher verbundene Einlaßkammer, ist von der benachbarten zweiten Kammer, der Auslaßkammer, durch ein Ventil getrennt, welches aus einem gehäusefesten Ventilsitz und einem einlaßseitig angeordneten, kugelförmigen Ventilschließglied besteht. Das Ventilschließglied ist in Schließrichtung von einer Druckfeder beaufschlagt. Die zweite Kammer ist von der dritten Kammer, einer Steuerkammer, durch einen Schwimmkolben getrennt. Dieser Schwimmkolben weist einen axialen Stößel zum Ventilschließglied hin auf und wird von der Steuerkammer her von einer Druckfeder in Ventilöffnungsrichtung beaufschlagt. Die Steuerkammer ist dem geregelten Druck eines hydraulischen Bremskraftverstärkers ausgesetzt. Ein solches Druckminderventil dient dazu, den vom Hilfsdruck beaufschlagten Ringraum des hydraulischen Kraftverstärkers nur einem so hohen Druck auszusetzen, wie es wirklich erforderlich ist, damit die Betätigungskräfte klein gehalten werden können. Zur Sicherstellung der Funktion des Ventils ist es erforderlich, alle Ringräume groß zu halten, damit auch große Volumendurchsätze durch das Ventil erfolgen können. Dadurch ergibt sich jedoch der Nachteil, daß eine Zentrierung des kugelförmigen Schließkörpers nicht mehr gegeben ist. An der Ventilfeder und dem Ventilschließglied treten nämlich ablösende Druckmittelturbulenzen auf, die die Kugel zu Radial- und Axialschwingungen anregen. Durch diese Schwingungen treten bei Betätigung des Druckminderventils starke Geräusche auf.

Die Aufgabe der vorliegenden Erfindung besteht in der Schaffung eines geräuschreduzierten gattungsgemäßen Druckminderventils.

Diese Aufgabe wird gelöst durch die kennzeichnenden Merkmale des Hauptanspruchs. Das Schließglied ist nicht mehr frei beweglich, sondern erhält eine Art axialverschiebbares Kugelgelenk.

Dadurch, daß die Kugelkalotte nicht im Druckmittelkanal liegt, trägt sie selbst nichts zur Anregung des Stößels zu Schwingungen bei.

Bei geöffnetem Ventil, also immer wenn das Ventil durchströmt wird, können Radialschwingungen des Ventilschließgliedes dadurch unterbunden werden, daß ein zweiter Stößel zwischen dem Ventilschließglied und einer Gehäusestirnwand einen Reibschluß herstellt. Dieser zweite Stößel kann am Ventilschließglied oder an der Gehäusestirnwand befestigt sein. Zur Erhöhung der Funktionssicherheit trägt eine selbstschließende Auslegung des Druckminderventils bei. Dies wird unter anderem dadurch begünstigt, daß an der auslaßseitigen Gehäusestirnwand eine Strömungsumkehr erfolgt.

Um die Dichtheit des Druckminderventils im geschlossenen Zustand zu erhöhen, sind verschiedene Maßnahmen möglich.

Eine formschlüssige Verbindung des Schließgliedes mit einem Gehäuseteil führt dazu, daß die bei höherem Druck auf den Regelkolben einwirkende größere Stellkraft eine höhere Dichtkraft zwischen Ventilsitz und Schließglied bewirkt.

Eine andere vorteilhafte Maßnahme stellt die Verwendung eines zweiteiligen Schließgliedes dar. Ein metallischer Schließkörper sorgt für exakte Druckminderung, während ein zusätzlicher elastomerer Schließkörper die Dichtheit des Druckminderventils erhöht.

Dabei ist es zweckmäßig, daß sich der elastomere Schließkörper nur oberhalb des Schließdruckes an den Ventilsitz anlegen kann. Das bedeutet, daß zunächst der Schließdruck sehr genau durch den metallischen Schließkörper bestimmt ist und sich erst bei einer weiteren Kolbenbewegung der elastomere Schließkörper dichtend anlegen kann. Bei der Ventilöffnung ist die Reihenfolge dann umgekehrt. Zunächst hebt der elastomere Schließkörper vom Ventilsitz ab, dann erst, genau bei Erreichen des Schließdruckes, löst sich der metallische Schließkörper vom Ventilsitz.

Weitere vorteilhafte Merkmale ergeben sich aus der folgenden Beschreibung bevorzugter Ausführungsbeispiele anhand von vier Zeichnungen.

Es zeigt:
- Fig. 1: ein vollständiges erfindungsgemäßes hydraulisches Druckminderventil;
- Fig. 2: Ausschnitte aus einem erfindungsgemäßen Druck-
- bis Fig. 4: minderventil mit Maßnahmen, welche die Dichtheit erhöhen.

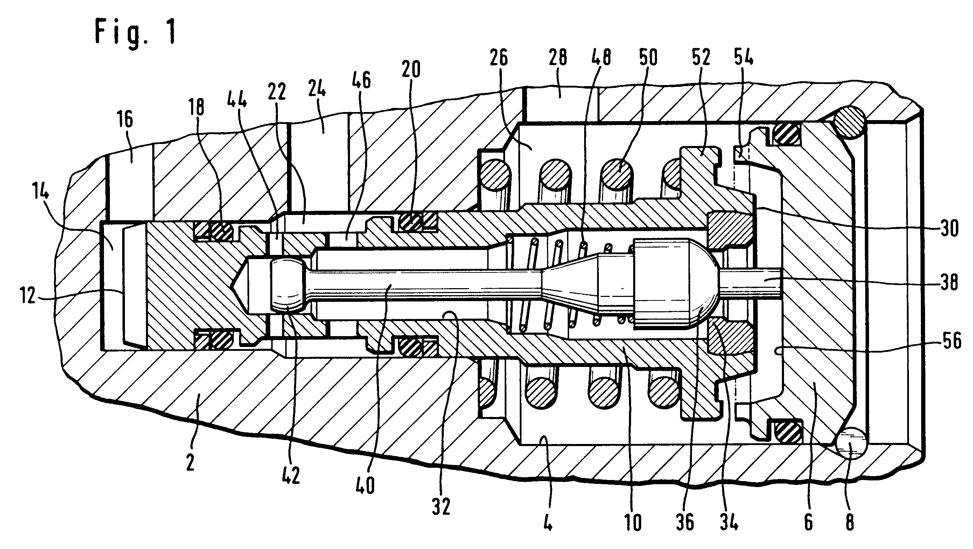

In Fig. 1 ist im Gehäuse 2 die Bohrung 4 angelegt, welche zum Gehäuseinneren zweifach abgestuft ist, wobei sich die Querschnitte verengen. Die Bohrung 4 ist nach außen mit dem Deckel 6 abgedichtet verschlossen, welcher durch den Sprengring 8 gehalten wird.

Innerhalb der Bohrung ist der Regelkolben 10 verschiebbar geführt, wobei er gegen die Bohrungswand mit mittlerem und mit kleinem Durchmesser jeweils abgedichtet ist. Dadurch begrenzt er drei Druckmittelkammern. Die gehäuseinnere Kolbenstirnwand 12 begrenzt die Steuerkammer 14, welche über den Steueranschluß 16 dem geregelten Druck eines hydraulischen Verstärkers ausgesetzt ist. Zwischen den beiden Kolbenabdichtungen 18,20 befindet sich der Einlaßraum 22, der über den Einlaß 24 an einen hydraulischen Hochdruckspeicher angeschlossen ist. Zwischen dem Deckel 6 und dem Einlaßraum 22 liegt der Auslaßraum 26. Der Druck im Auslaßraum 26 wird über den Auslaß 28 an den hydraulischen Verstärker weitergegeben.

Die Flächenverhältnisse des Regelkolbens 10 an den Kolbenabdichtungen 18 und 20 sind so gewählt, daß der Druck im Auslaßraum 26 die größte Wirkfläche besitzt und in Schließrichtung wirkt, so daß nach Überschreiten eines die Kraft der Steuerfeder 50 abzüglich der Kraft der Ventilfeder 48 aufbringenden Druckes das Ventil schließt und bei höheren Einlaßdrücken der Auslaßdruck proportional, den Flächenverhältnissen entsprechend, gemindert wird.

Von seiner auslaßseitigen Stirnseite 30 her besitzt der Regelkolben 10 eine axiale Innenbohrung 32, die sich bis zur den Einlaßraum 22 vom Steuerraum 14 trennenden Kolbenabdichtung 18 erstreckt und dort blind endet. Mit der Stirnseite 30 ist der Ventilsitz 34 verstemmt. Er wirkt mit dem in der Innenbohrung angeordenten Schließglied 36 zusammen. Dieses ist zum Deckel 6 hin mit dem Ventilstößel 38 versehen, welcher den Ventilsitz 34 durchragt und bei geöffnetem Ventil am Deckel 6 anliegt. Auf seiner dem Deckel 6 abgewandten Seite besitzt das Schließglied 36 den axialen Führungsstößel 40, der fast so lang ist wie die Innenbohrung 32 und der mit der Kugelkalotte 42 endet. Der Krümmungsradius der Kugelkalotte 42 ist dem Radius der Innenbohrung 32 in diesem axialen Bereich angepaßt. Die Kugelkalotte 42 befindet sich im axialen Bereich des Einlaßraumes 22.

Der Regelkolben 10 besitzt vom Einlaßraum 22 zur Innenbohrung 32 radiale Durchlässe 44,46 die sich axial vor und hinter der Kugelkalotte 42 befinden und durch welche die Innenbohrung 32 entlüftet wird. Durch diese Maßnahme ist die Kugelkalotte geflutet und keinen axialen Druckmittelkräften ausgesetzt. Außerdem befindet sich an ihrem Umfang kein Druckmitteldurchlaß, so daß auch keine Vibrationen durch Strömungsbewegungen angeregt werden können.

In Schließrichtung wird das Schließglied 36 von der Ventilfeder 48 beaufschlagt, welche sich an einer Stufe der Innenbohrung 32 abstützt. Zusätzlich zum Druck in der Steuerkammer 14 wirkt auf den Regelkolben 6 in Ventilöffnungsrichtung die Steuerfeder 50, welche im Auslaßraum 26 angeordnet ist und sich einerseits an einer Stufe der Bohrung 4 abstützt und andererseits auf einen umlaufenden radialen Vorsprung 52 nahe der deckelseitigen Stirnseite 30 am Regelkolben 6 wirkt. Deckelseitig legt sich der Vorsprung 52 bei Ventilöffnung an die am Umfang des Deckels 6 angeordneten Distanzsockel 54 an. Hierdurch wird eine freie Druckmittelverbindung zum Auslaß 28 sichergestellt.

Die der Bohrung 4 zugewandte Innenseite 56 des Deckels 6 ist schüsselartig ausgehöhlt, so daß die Distanzsockel 54 den Schüsselrand bilden. Hierdurch wird bewirkt, daß der den Ventilsitz 34 durchtretende Druckmittelstrom radial nach außen und axial zurück umgelenkt wird. Er wirkt dann in Ventilschließrichtung auf den Vorsprung 52 des Regelkolbens 10 ein.

Die durchströmten Querschnitte des Ventils können vergleichsweise groß gehalten werden, da das Ventilschließglied zwei Abstützpunkte besitzt. Die Kugelkalotte 42 mit ihrer eng der Bohrung angepaßten Rundung erlaubt nur eine Radialschwingung des Ventilschließgliedes 36 über einen sehr engen Winkelbereich. Solche Radialschwingungen werden jedoch durch die Anlage des Ventilstößels 38 am Deckel 6 unterbunden. Durch die großen Strömungsquerschnitte kann sich eine parabelförmige Geschwindigkeitsverteilung des Druckmittels aufbauen, welche auf das Ventilschließglied 36 in allen durchströmten Ringräumen eine zusätzliche axiale Normalkraft ausübt. Hierdurch werden Axialschwingungen gemindert. Durch die bei Radialschwingungen auftretende erhöhte Reibung werden auch diese stark gedämpft. Je schneller das Ventil durchströmt wird, desto stärker wird die reibschlüssige Anlage des Ventilstößels 38 am Deckel 6, so daß die Schwingungsneigung weiter gesenkt wird.

Erfindungsgemäß sind also verschiedene geräuschdämpfende Maßnahmen vereinigt worden, welche zusammen ein leise schaltendes, aber dennoch große Volumenströme erlaubendes Druckminderventil schaffen.

In drucklosem Zustand ist das Druckminderventil geöffnet. Der Vorsprung 52 liegt an dem Distanzsockel an, so daß das Ventilschließglied 36 durch den Ventilstößel 38 auf Abstand vom Ventilsitz 34 gehalten wird. Bei Überschreiten eines durch den Druck in der Steuerkammer und durch die Kraft der Steuerfeder 50 festgelegten Initialdruckes setzt sich der Regelkolben 10 in Richtung auf die Steuerkammer 14 in Bewegung, bis bei Erreichen des Schließdruckes sich der Ventilsitz 34 in der dargestellten Position in Anlage am Schließglied 36 befindet.

Da hier zwei metallische Teile, nämlich das Schließglied 36 und der Ventilsitz 34, für die Dichtheit des Ventils sorgen und da andererseits die Anlagekraft zwischen diesen beiden Teilen ausschließlich durch die schwache Ventilfeder 48 bestimmt ist, kann es zu einer Leckage kommen. Wenn aber das Druckminderventil nicht zuverlässig schließt, bewegt sich der Regelkolben 10 durch den leichten weiteren Anstieg des Druckes im Auslaßraum 26 weiter bis zum Anschlag an der Rückwand der Steuerkammer 14. In weiterer Folge erhöht sich allmählich der Druck im Auslaßraum 26, bis er so hoch ist, daß das Ventil seine Aufgabe nicht mehr ordnungsgemäß erfüllt.

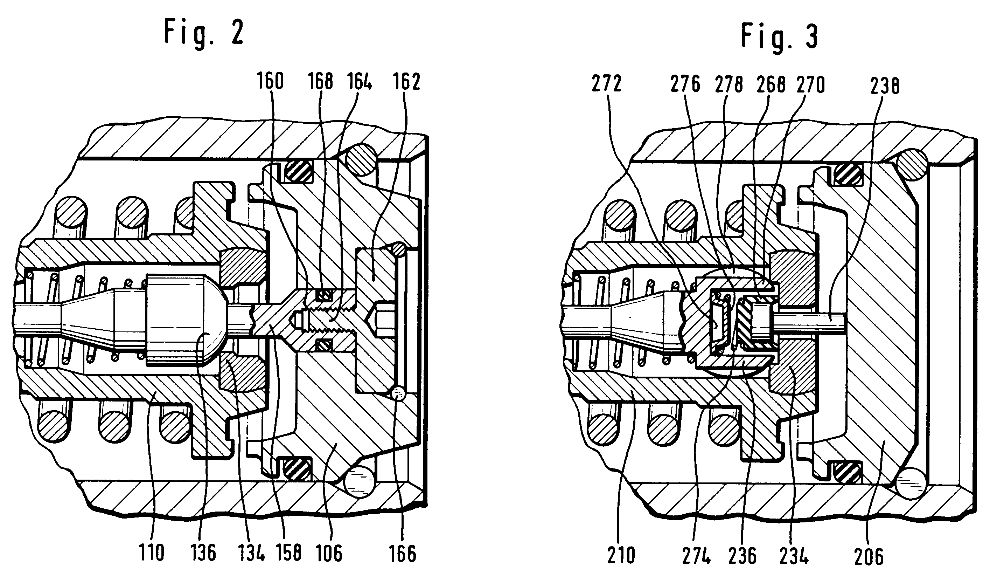

In den folgenden Figuren sind daher Maßnahmen getroffen worden, welche die Dichtheit des Druckminderventils erhöhen. Die dargestellten Ausschnitte lassen sich wahlweise in Fig. 1 einsetzen. Die Bezugszeichen der Figuren 2 bis 4 sind gegenüber denen in Fig. 1 um ein Vielfaches von 100 erhöht, sofern es sich um funktionsgleiche Elemente handelt.

In Fig. 2 ist an das Schließglied 136 das Verbindungsstück 158 angeformt, welches den Ventilsitz 134 durchragt. Das Verbindungstück 158 besitzt ein Innengewinde 160, in welches der am Haltestück 162 angeformte Gewindebolzen 164 eingeschraubt ist. Das Haltestück 162 ist mit Hilfe des Sprengringes 166 am Deckel 106 befestigt. Zur Abdichtung des Verbindungsstückes 158 gegen die Atmosphäre ist es mit dem Dichtring 168 versehen.

Auf die dargestellte Weise ist nunmehr das Schließglied 136 formschlüssig mit dem Deckel 106 verbunden und damit axial unbeweglich befestigt. Wenn sich bei Erreichen des Schließdruckes der Ventilsitz 134 an das Schließglied 136 anlegt, ist die abgebildete Position erreicht und ändert sich bei weiterer Druckerhöhung nicht. Infolge dessen steigt die Anlagekraft des Ventilsitzes 134 am Schließglied 136 bei einer weiteren Druckerhöhung an. Hierdurch wird eine gegenüber Fig. 1 erhöhte Dichtheit des Ventils erzielt.

In Fig. 3 ist das Problem der Leckage auf andere Weise gelöst:

Das Schließglied 236 weist hier zwei Schließkörper 268 und 270 auf. Der metallische Schließkörper 270 befindet sich radial außerhalb des Schließkörpers 268, welcher aus elastomerem Material beispielsweise Gummi gefertigt ist.

Der Schließkörper 268 befindet sich in einer zylindrischen Ausnehmung 272 im Schließglied 236. Er ist gegenüber dem Schließkörper 270 beweglich und wird von der Zwischenfeder 274 in Richtung auf den Ventilsitz 234 beaufschlagt. Die Zwischenfeder 274 hält zusätzlich das Stützblech 276 im Anschlag am Boden der Ausnehmung 272.

Wenn das Ventil wie dargestellt geschlossen ist, liegt der metallische Schließkörper 270 an einer Kante des Ventilsitzes 234 an, und der elastomere Schließkörper 268 an einer Fläche des Ventilsitzes 234. Beim Öffnen des Ventils verschiebt sich der Regelkolben 210 in Richtung auf den Deckel 206. Aufgrund seiner Anlage am Deckel 206 hebt der Ventilstößel 268 vom Ventilsitz 234 ab.

Wenn der Schließkörper 268 am Stützblech 276 anschlägt, wird bei weiterer Verschiebung des Regelkolbens der metallische Schließkörper 270 vom Ventilsitz 234 getrennt.

Beim Schließen des Ventils erfolgen diese Vorgänge in umgekehrter Reihenfolge. Zur Stabilisierung der Schließgliedbeweung sind an das Schließglied 236 die Führungsohren 278 angeformt, die an der Innenwand des Regelkolbens 210 entlang gleiten können.

Die bei der Ventilbetätigung gewählte Schließreihenfolge, hat den Vorteil, daß der genaue Vorgang der Druckminderung ausschließlich vom metallischen Schließkörper 270 vorgenommen wird, während der elastomere Schließkörper 268 lediglich zur Erhöhung der Ventildichtheit dient und keinerlei Regelfunktionen ausüben muß. Deshalb erfolgt die Anlage des elastomeren Schließkörpers 268 nur dann, wenn der metallische Schließkörper nicht vollkommen abdichtet, so daß der Regelkolben sich weiter verschiebt.

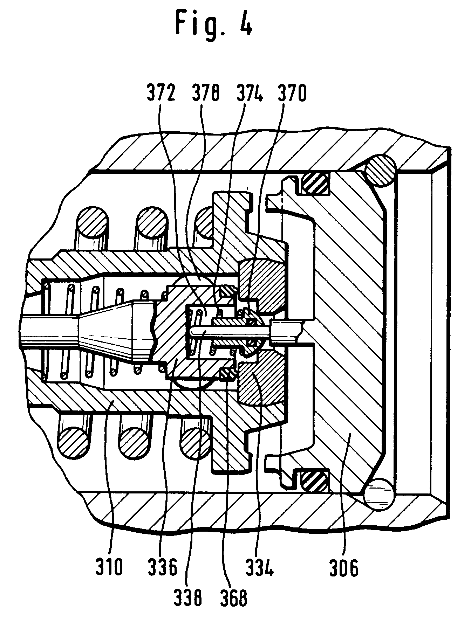

Das Prinzip der Anordnung nach Fig. 4 ist ganz ähnlich wie das von Fig. 3. Der wichtigste Unterschied zu Fig. 3 besteht darin, daß in diesem Ausführungsbeispiel der metallische Schließkörper innerhalb des elastomeren Schließkörpers angeordnet ist.

Wie in Fig. 3 weist das Schließglied 336 auch Führungsohren 378 auf, welche an einer Innenwand des Regelkolbens 310 entlanggleiten können. Der elastomere Schließkörper 368 liegt auch hier an einer Fläche des Ventilsitzes 334 an, während der metallische Schließkörper 370 an einer Kante des Ventilsitzes 334 anliegt.

Im Unterschied zur Fig. 3 ist hier allerdings der Ventilstößel 338 am Deckel 306 angeformt. Der Ventilstößel 338 besitzt zu seinem Ende hin eine stufige Verjüngung. Auf seinem dünnsten Abschnitt ist der metallische Schließkörper 370 abgedichtet axial beweglich geführt. Dieser Schließkörper 370 wird von der Zwischenfeder 374 zum Ventilsitz 334 hin beaufschlagt.

Da der Ventilstößel 338 am Boden der Ausnehmung 372 anliegt, wird bei einer Bewegung des Regelkolbens 310 zum Deckel 306 hin zunächst der elastomere Schließkörper 368 vom Ventilkörper 304 abgehoben. Erst wenn die Stufe am Ventilstößel 338 den metallischen Schließkörper 370 erreicht, wird dieser von der Kante am Ventilsitz 234 entfernt.

Für die Ausführungsformen nach Fig. 3 und Fig. 4 sind filigrane Montagearbeiten notwendig, es bietet sich eine ganze Reihe von Vorteilen, die beiden Beispielen gemeinsam sind. Die Druckregelung erfolgt ausschließlich über die metallischen Schließkörper 270 und 370. Nur dann, wenn diese Dichtung Leckage aufweist, verschiebt sich der Regelkolben 210 bzw. 310 weiter, so daß sich das elastomere Schließglied 268 bzw. 368 an den Ventilsitz 234 bzw. 334 anlegt. Die geräuschmindernden Eigenschaften dieses hydraulischen Druckminderventils werden also durch die zusätzliche Einbringung einer Gummidichtung in keiner Weise beeinträchtigt. Es ergibt sich jedoch noch zusätzlich der Vorteil, daß eine zuverlässige Dichtheit jederzeit gewährleistet ist. Da der elastomere Schließkörper keinen Volumenstrom regeln muß, führt die Ventilbetätigung auch nicht zu einem erhöhten Verschleiß. Schließlich wird im Vergleich zu Fig. 2 die mechanische Belastung des Ventilsitzes erheblich reduziert.

### Bezugszeichenliste

- 2: Gehäuse
- 4: Bohrung
- 6: Deckel
- 8: Sprengring
- 10: Regelkolben
- 12: Kolbenstirnwand
- 14: Steuerkammer
- 16: Steueranschluß
- 18: Kolbenabdichtung
- 20: Kolbenabdichtung
- 22: Einlaßraum
- 24: Einlaß
- 26: Auslaßraum
- 28: Auslaß
- 30: Stirnseite
- 32: Innenbohrung
- 34: Ventilsitz
- 36: Schließglied
- 38: Ventilstößel
- 40: Führungsstößel
- 42: Kugelkalotte
- 44: Durchlaß
- 46: Durchlaß
- 48: Ventilfeder
- 50: Steuerfeder
- 52: Vorsprung
- 54: Distanzsockel
- 56: Innenseite
- 106: Deckel
- 134: Ventilsitz
- 136: Schließglied
- 158: Verbindungsstück
- 160: Innengewinde
- 162: Haltestück
- 164: Gewindebolzen
- 166: Sprengring
- 206: Deckel
- 210: Regelkolben
- 234: Ventilsitz
- 236: Schließglied
- 238: Ventilstößel
- 268: Schließkörper
- 270: Schließkörper
- 272: Ausnehmung
- 274: Zwischenfeder
- 276: Stützblech
- 278: Führungsohren
- 306: Deckel
- 310: Regelkolben
- 334: Ventilsitz
- 336: Schließglied
- 338: Ventilstößel
- 368: Schließkörper
- 370: Schließkörper
- 372: Ausnehmung
- 374: Zwischenfeder
- 378: Führungsohren

## Patentansprüche

1. Hydraulisches Druckminderventil, welches in einem Gehäuse einen an einen hydraulischen Hochdruckspeicher angeschlossenen Einlaßraum (22), einen an einen hydraulischen Bremskraftverstärker angeschlossenen Auslaßraum (26) und ein zwischen Einlaßraum (22) und Auslaßraum (26) angeordnetes, von einem Regelkolben (10) betätigtes Sitzventil (34,36) aufweist, wobei der Regelkolben (10) in Ventilöffnungsrichtung von der Kraft einer Steuerfeder (50), sowie vom geregelten Druck des hydraulischen Bremskraftverstärkers beaufschlagt ist, dadurch **gekennzeichnet,** daß das Schließglied (36) des Sitzventils in einer Innenbohrung (32) des Regelkolbens (10) angeordnet ist und einen ersten axialen Stößel(40) aufweist, welcher an seinem dem Schließglied (36) abgewandten Ende als Kugelkalotte (42) geformt ist, deren Durchmesser dem der Innenbohrung (32) angepaßt ist.

2. Hydraulisches Druckminderventil nach Anspruch 1, dadurch **gekennzeichnet,** daß die Kugelkalotte (42) von allen Seiten dem Einlaßraumdruck ausgesetzt ist, wobei an ihrem Umfang kein Druckmitteldurchlaß angeordnet ist.

3. Hydraulisches Druckminderventil nach Anspruch 1 oder 2, dadurch **gekennzeichnet,** daß zwischen dem Schließglied (36) und einer Gehäusestirnwand (6) ein zweiter axialer Stößel (38) angeordnet ist, der einen am Regelkolben (10) befestigten Ventilsitz (34) durchragt und bei geöffnetem Sitzventil einen Reibschluß zwischen dem Schließglied (36) und der Gehäusestirnwand (6) herstellt.

4. Hydraulisches Druckminderventil nach Anspruch 1 oder 2, dadurch **gekennzeichnet,** daß das Schließglied (136) mittel eines Verbindungsstückes (158), welches einen am Regelkolben (110) befestigten Ventilsitz (134) durchragt, formschlüssig mit einer Gehäusestirnwand (106) verbunden ist.

5. Hydraulisches Druckminderventil nach Anspruch 3 oder 4, dadurch **gekennzeichnet,** daß die Gehäusestirnwand (6,106,206,306) den Auslaßraum (26) begrenzt und so schüsselartig geformt ist, daß der den Ventilsitz (34,124 234,334) durchtretende Druckmittelstrom radial nach außen und dann axial zurückgelenkt wird.

6. Hydraulisches Druckminderventil nach einem der vorhergehenden Ansprüche, dadurch **gekennzeichnet,** daß das Schließglied (236,336) zwei relativ zueinander bewegliche Schließkörper (268,270;368,370) aufweist, von denen der eine (268,368) aus elastomerem Material und der andere (270,370) aus Metall besteht.

7. Hydraulisches Druckminderventil nach Anspruch 6, dadurch **gekennzeichnet,** daß der Schließkörper (268,368) aus elastomerem Material nur dann an den Ventilsitz (234,334) anlegbar ist, wenn der metallische Schließkörper (270,370) am Ventilsitz (234,334) anliegt.

## Claims

1. A hydraulic presssure reducing valve which includes, in a housing, an inlet chamber (22) connected to a hydraulic high-pressure accumulator, an outlet chamber (26) connected to a hydraulic brake power booster, and a seat valve (34, 36) interposed between the inlet chamber (22) and the outlet chamber (26) and operated by a control piston (10), the control piston (10) being acted upon by the force of a control spring (50) in the direction so as to open the valve, and by the controlled pressure of the hydraulic brake power booster,
**characterized** in that the closure member (36) of the seat valve is arranged in an inner bore (32) of the control piston (10) and includes a first axial tappet (40) which, at its end remote from the closure member (36), is formed as a spherical segment (42) having its diameter adapted to the diameter of the inner bore (32).

2. A hydraulic pressure reducing valve as claimed in claim 1,
**characterized** in that the spherical segment (42) is exposed to the pressure of the inlet chamber on all sides, no pressure fluid passage being provided at its periphery.

3. A hydraulic pressure reducing valve as claimed in claim 1 or claim 2,
**characterized** in that a second axial tappet (38) is interposed between the closure member (36) and a housing end wall (6) and extends through a valve seat (34) attached to the control piston (10), thereby providing a frictional engagement between the closure member (36) and the housing end wall (6) when the seat valve is open.

4. A hydraulic pressure reducing valve as claimed in claim 1 or claim 2,
**characterized** in that the closure member (136) is positively connected with a housing end wall (106) by way of a connecting portion (158) which extends through a valve seat (134) attached to the control piston (110).

5. A hydraulic pressure reducing valve as claimed in claim 3 or claim 4,
**characterized** in that the housing end wall (6, 106, 206, 306) confines the outlet chamber (26) and is shaped like a bowl such that the pressure fluid flows through the valve seat (34, 124, 234, 334) and is deflected radially outwardly and, subsequently, is returned in an axial direction.

6. A hydraulic pressure reducing valve as claimed in any one of the preceding claims,
**characterized** in that the closure member (236, 336) includes two closure elements (268, 270; 368, 370) which are movable in relation to each other, the one closure element (268, 368) being made of elastomeric material, while the other closure element (270, 370) is made of metal.

7. A hydraulic pressure reducing valve as claimed in claim 6,
**characterised** in that the closure element (268, 368) made of elastomeric material is movable into abutment on the valve seat (234, 334) only if the metallic closure element (270, 370) bears against the valve seat (234, 334).

## Revendications

1. Valve réductrice de pression hydraulique, comportant dans un boîtier une chambre d'admission (22) reliée à un accumulateur hydraulique haute pression, une chambre d'échappement (26) reliée à un amplificateur hydraulique d'effort de freinage, et une valve à siège (34, 36) disposée entre la chambre d'admission (22) et la chambre de sortie (26), actionnée par un piston régulateur (10), le piston régulateur (10) étant soumis, dans le sens de l'ouverture de la valve, à l'action d'un ressort de commande (50) et à celle de la pression régulée de l'amplificateur hydraulique d'effort de freinage,
caractérisée en ce que l'élément obturateur (36) de la valve à siège est disposé dans un alésage intérieur (32) du piston régulateur (10), et comporte une première tige axiale (40), qui est configurée, à son extrémité opposée à l'élément obturateur (36), sous forme d'une calotte sphérique (42), dont le diamètre est ajusté sur celui de l'alésage intérieur (32).

2. Valve réductrice de pression hydraulique selon la revendication 1, caractérisée en ce que la calotte sphérique (42) est exposée de tous les côtés à la pression régnant dans la chambre d'admission, aucun passage de fluide de pression n'étant agencé au niveau de la périphérie de la calotte.

3. Valve réductrice de pression hydraulique selon la revendication 1 ou 2, caractérisée en ce qu'une deuxième tige axiale (38) est disposée entre l'élément obturateur (36) et une face frontale (6) du boîtier, cette tige traversant un siège de soupape (34) aménagé dans le piston régulateur (10) et créant, lorsque la valve est ouverte, un engagement de frottement entre l'élément obturateur (36) et la paroi frontale (6) du boîtier.

4. Valve réductrice de pression hydraulique selon la revendication 1 ou 2, caractérisée en ce que l'élément obturateur (136) est relié par conjugaison des formes à une face frontale (106) du boîtier, par l'intermédiaire d'un élément de liaison (158) traversant un siège de valve (134) fixé dans le piston régulateur (110).

5. Valve réductrice de pression hydraulique selon la revendication 3 ou 4, caractérisée en ce que la face frontale (6, 106, 206, 306) du boîtier délimite la chambre d'échappement (26) et est configurée en forme de cuvette de manière telle que le flux de fluide de pression s'écoulant à travers le siège de valve (34, 134, 234, 334) soit détourné radialement vers l'extérieur, puis axialement vers l'arrière.

6. Valve réductrice de pression hydraulique selon l'une des revendications précédentes, caractérisée en ce que l'élément obturateur (236, 336) comporte deux obturateurs (268, 270; 368, 370) mobiles l'un par rapport à l'autre, dont l'un (268, 368) est réalisé en une matière élastomère et l'autre (270, 370) est réalisé en métal.

7. Valve réductrice de pression hydraulique selon la revendication 6, caractérisée en ce que l'élément obturateur (268, 368) en matière élastomère ne peut se plaquer sur le siège de valve (234, 334) que lorsque l'élément obturateur métallique (270, 370) est déjà en contact avec le siège de valve (234, 334).
